# EUROPEAN PATENT APPLICATION

(11) **EP 1 691 109 A2**
(43) Date of publication of application: **16.08.2006**
(21) Application number: 06250730.6
(22) Date of filing: 10.02.2006
(51) Int. Cl.: F16H 7/12, B65G 23/44, G11B 15/68

(54) **Integrated belt tensioning devices and associated methods**

(30) Priority: 11.02.2005 US 57685
(71) Applicant: QUANTUM CORPORATION, San Jose, CA 95110 (US)
(72) Inventor: Fairchild, Robert, Cowan Heights, California 92705 (US)
(74) Representative: Charig, Raymond Julian

(57) **Abstract**

Methods and systems for integrated belt tensioning devices are provided. One exemplary device includes a pulley (362), a biasing member (374), and an indicator (354). The biasing member (374) (e.g., a spring or the like) is adapted to bias the pulley (362) to a biased position. The indicator (354) is associated with the position of the pulley (362) and varies according to the relative position of the pulley (362) to the biased position. Tension from a belt (Fig. 2,158) acting on the pulley (362) displaces the pulley (362) away from the biased position, against the biasing force (F_{bias}). The indicator (354) varies according to the relative position of the pulley (362) from the biased position and may thereby be correlated to tension in the belt. The belt tensioning device (Fig. 2,160) may be used with automated storage libraries (Fig. 1,100) e.g., a cross-link mechanism (Fig. 2,150) or the like.

## Description

### BACKGROUND

### 1. Field:

Various aspects and examples relate generally to belt drive systems, and more particularly to integrated belt tensioning devices and associated methods, which may advantageously be used with automated storage libraries.

### 2. Description of Related Art:

Belt drive systems typically include a motor driven belt spanning between two or more pulleys. Typically, the tension of the belt in the belt drive system is important for the performance and operation of the belt drive system as well as the wear and period of life of the belt. For example, the belt drive system may operate poorly or wear excessively with incorrect tension. Accordingly, belt drive systems generally operate with a desired tension (or within a desired range). Measuring and adjusting the tension of a belt in a belt drive system generally requires external measuring devices, e.g., force meters or the like, access to various portions of the belt drive system, and skilled technicians to determine and adjust the tension.

One exemplary method for adjusting the tension in a belt drive system includes a force displacement method where the belt is displaced near a midpoint of the span by a predetermined distance using a force gauge. The force gauge reading may be used to determine the tension in the belt (alternatively, the belt may be displaced by predetermined force and the distance of displacement correlated to a tension value). The belt may be adjusted based on the force gauge reading, and tension measurement(s) repeated until a desired tension of the belt is achieved.

Another exemplary method for adjusting the tension in a belt drive system includes a frequency method where the belt is set vibrating, and the frequency is measured electronically with a frequency meter and correlated to tension in the belt. The frequency meter is placed at the mid point between the two pulleys.

These and other methods of determining and adjusting tension in a belt system require external tools and access to the belt drive system. For example, force meters and one skilled in measuring tension of the belt in the belt system may be needed. Additionally; access to the midpoint of the belt span may be needed and various portions of the housing or surrounding system may need to be removed to allow such access for measuring and adjusting the tension to a desired value.

One exemplary technology area that uses belt drive systems includes automated storage libraries. Automated storage libraries generally include a housing having plurality of storage bins or slots for holding storage devices (such as magnetic or optical devices), a robotic cartridge gripping mechanism (often referred to as a "picker"), and one or more media drives. The robotic picker may be controlled to select a specific storage device from the library and transfer the storage device between a storage slot and a media drive within seconds. The robotic picker typically includes a gripper or hand mechanism positioned on the robotic picker. The robotic picker may position the gripper near a desired storage device and activate the gripper to engage or grip the storage device to remove the storage device from the storage bin. The robotic arm may move the gripper and storage device to a location to load the storage device into a media drive, load port (for adding or removing storage devices from the library), and the like.

Multiple automated storage libraries may be placed near each other and coupled through a cross-link mechanism, whereby two or more automated storage libraries exchange storage devices. For example, a cross-link mechanism may include a picker mechanism or pocket driven by a belt drive system, which cooperates with the library system picker to selectively transport storage cartridges from one storage library to another.

Generally, the picker mechanism associated with the cross-link mechanism desirably moves with a fairly high degree of precision and repeatability to access and transport storage devices. The operation and precision of the cross-link mechanism may be improved by ensuring that the belt driving the picker mechanism has a tension value within desired tolerances, and that the belt tension value remain substantially constant over time. For example, if the tension varies from a desired value, the precision of the cross-link mechanism may suffer as well as the life of the belt drive system associated with the cross-link mechanism. Accordingly, the tension in the belt is desirably set upon installation and easily measured and adjusted over time to remain within desired tolerances.

### BRIEF SUMMARY

In one example described herein, a belt tensioning device is provided. The belt tensioning device includes a pulley, a biasing member, and an indicator. The biasing member (e.g., a spring or the like) is adapted to bias the pulley toward a biased position. The indicator is associated with the position of the pulley and varies according to the relative position of the pulley to the biased position. For example, increased tension from a belt acting on the pulley displaces the pulley away from the biased position, against the biasing force. The indicator varies according to the relative position of the pulley from the biased position and may thereby be correlated to the tension in the belt system. The belt tensioning device, including, for example, the biasing member, pulley, and indicator, may be configured for particular belt drive systems and desired belt tension values.

The indicator may be configured to indicate a desired tension or may be graduated to indicate various tension values. The indicator may include various suitable elements to visually indicate the displacement of the pulley (or other relatively moving portions of the belt tensioning device which may be correlated to tension in the belt system). For example, various indicia, markings, windows, or other suitable visual cues associated with various positions of relatively moving portions of the belt tensioning device may be used to indicate tension in the belt system.

In another aspect described herein, a cross-link mechanism for transferring storage devices between two or more automated storage libraries is provided. In one example, the cross-link mechanism includes a belt spanning between two or more pulleys and a belt tensioning device. The belt tensioning device may include a first pulley, a biasing member coupled to the first pulley to bias the pulley in a biased position, and an indicator associated with the pulley, wherein the pulley is configured such that tension in the belt displaces the first pulley away from the biased position, and the indicator varies according to the displacement of the first pulley.

In another aspect described herein, a method for tensioning a belt within a belt drive system is provided. The method includes biasing a pulley of the belt drive system such that as tension in the belt increases the pulley moves away from the biased positioned. An indicator associated with the relative position of the pulley may be used to correlate the displacement of the pulley to a tension in the belt.

In one example, a belt is positioned to span between two or more pulleys. One of the pulleys is included with a belt tensioning device, the belt tensioning device including the pulley, a biasing member to bias the pulley, and an indicator associated with the relative position of the pulley. The belt tensioning assembly is adjusted to tension the belt between the two or more pulleys. The indicator may be observed to indicate the tension in the belt and the belt tensioning assembly may be repositioned to vary the tension in the belt.

Various aspects and examples of the present inventions are better understood upon consideration of the detailed description below in conjunction with the accompanying drawings and claims.

### BRIEF DESCRIPTION OF DRAWINGS

**Figure 1** illustrates two exemplary storage library systems coupled by a cross-link mechanism, the cross-link mechanism including a belt tensioning device according to one example;

**Figure 2** illustrates an exemplary cross-link-mechanism including a belt tensioning device in greater detail;

**Figures 3A and 3B** illustrate a perspective and exploded illustration of an exemplary belt tensioning device;

**Figures 4A and 4B** illustrate side views of an exemplary belt tensioning device under varying load conditions; and

**Figures 5A and 5B** illustrate cross-sectional side views of an exemplary belt tensioning device under varying load conditions.

### DETAILED DESCRIPTION

The following description is presented to enable a person of ordinary skill in the art to make and use various aspects of the inventions. Descriptions of specific materials, techniques, and applications are provided only as examples. Various modifications to the examples described herein will be readily apparent to those of ordinary skill in the art, and the general principles defined herein may be applied to other examples and applications without departing from the spirit and scope of the inventions.

According to one example, a belt drive system including an integrated, self-contained belt tensioning device is provided. The belt tensioning device may be integrated within the belt drive system, e.g., at least a portion of the belt tensioning device, such as a pulley, is part of the belt drive system. In one example, the belt tensioning device includes a pulley that engages the belt during operation of the belt drive system. The belt tensioning device may be moved to adjust the tension in the belt. The pulley is biased in a direction (e.g., away from the belt) by a biasing member (e.g., a spring) such that as tension in the belt is increased, the pulley moves relative to the belt tensioning device and against the biasing force. An indicator may be associated with the tensioning device to iridicate the displacement of the pulley from its biased position as tension in the belt is increased. The displacement of the pulley may be correlated (based on, e.g., the biasing force, the distance of displacement, etc.) to a tension value in the belt. Accordingly, the indicator may allow a user to visually inspect and ensure proper tension in the belt without additional gauges or instruments. The indicator may include any suitable indicia, marks, devices, or the like associated with relative moving portions of the belt tensioning assembly to indicate tension in the belt.

Exemplary belt drive systems and belt tensioning assemblies are described herein generally with respect to automated storage libraries and mechanisms for linking multiple automated storage libraries. These descriptions and examples are illustrative only of several applications of the exemplary belt drive systems and belt tensioning assemblies; those of ordinary skill in the art will recognize that the exemplary belt drive systems and belt tensioning assemblies may be used in a variety of other applications and technologies including belt drive systems not specifically mentioned herein.

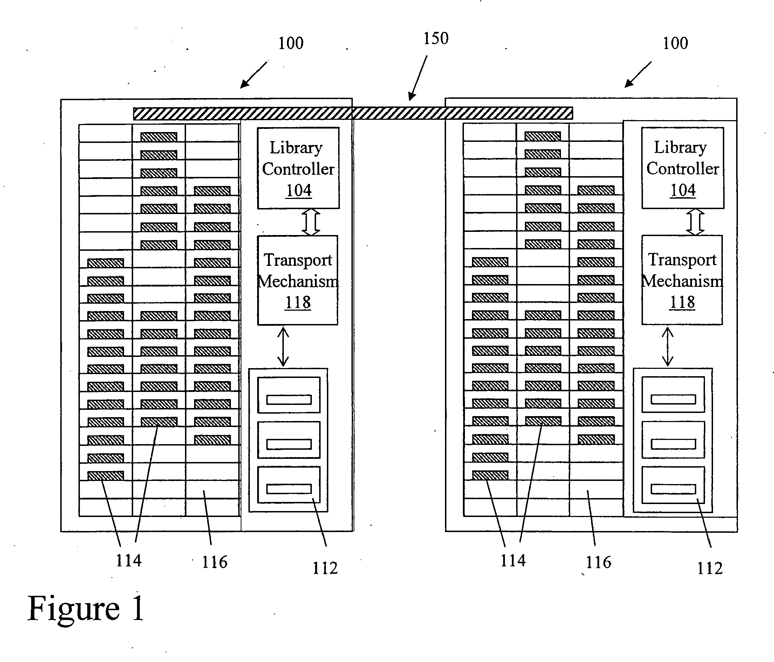

**Figure 1** is a schematic illustration of two exemplary automated storage library systems 100 for the storage and retrieval of a plurality of storage devices 114 stored therein. Storage library systems 100 include one or more media drives 112, a plurality of storage devices 114 stored in bins or storage slots 116, and a transport mechanism 118 that may be equipped with a picker mechanism (not shown) for transporting selected storage devices 114, for example, between a drive 112 and a storage slot 116. Storage library systems 100 further includes a library controller 104 that communicates with a host processor or computer network to control the actions of transport mechanism 118 and drives 112 to retrieve and/or store data.

Automated storage library systems 100 may further include various other features such as load ports for manually adding and removing storage devices to and from the library, various access doors, control panels, power supplies, and the like as are known in the art. For clarity, however, such additional features have been omitted from the description.

Storage library systems 100 may further transfer storage devices 114 from one library system 100 to an adjacent library system 100 via cross-link mechanism 150. Accordingly, cross-link mechanism 150 allows two or more storage library systems 100 to share storage devices 114 by loading a cartridge onto cross-link mechanism 150 and transferring device 114 to a new location within an adjacent storage library system 100.

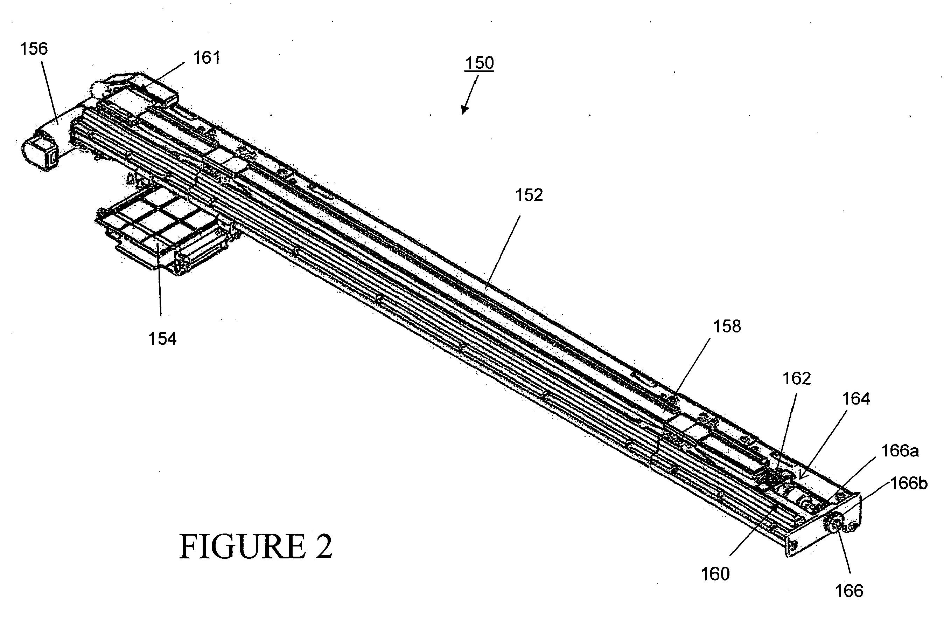

Exemplary cross-link mechanism 150 includes a belt drive motor system as shown in greater detail in **Figure 2.** In particular, cross-link mechanism 150 generally includes track 152 for guiding a picker mechanism 154 (which may include any suitable device for engaging or holding one or more storage devices). Picker mechanism 154 is driven by a belt motor system including motor 156 and belt 158 spanning between pulleys 161 and 162. Additionally, the belt motor system includes a belt tensioning device 160 including pulley 162, a tension indicator 164, and an adjustment screw 166. The belt tensioning device 160 is adjustatily fixed to a frame member of track 152 via adjustment screw 166 and nuts 166a and 166b. Further, tension indicator 164 provides a visual indication of the force on pulley 162 associated with the tension in belt 158. Additionally, belt tensioning device 160 includes a biasing member (not shown in **Figure 2).**

Belt 158 is driven by motor 156 and spans between pulley 161 associated with motor 156 and pulley 162 of belt tensioning device 160. Belt tensioning device 160 may be adjusted via adjustment screw 166 and nuts 166a and 166b to adjust the position of pulley 162 and the tension in belt 158. Moving belt tensioning device 160 away from belt 158 (to the right, away from pulley 161) increases tension in belt 158 and shifting belt tensioning device 160 toward belt 158 (to the left, toward pulley 161) decreases tension in belt 158.

In this example, pulley 162 of belt tensioning device 160 is biased in a direction away from pulley 161 and the direction of tension force produced by belt 158 on pulley 162. The biasing force is such to offset a desired tension in belt 158. In particular, as pulley 162 is moved away from pulley 161 (to the right in **Figure 2)** tension increases in belt 158 and on pulley 162. The force of tension in belt 158 will overcome the biasing force acting on pulley 162 such that pulley 162 will move relative to tensioning device 160. In particular, the tension in belt 158 results in a displacement of pulley 162 relative to adjustment screw 166 and generally opposite the biasing force direction. The displacement provides an indication of the tension force in belt 158.

The displacement of pulley 162 relative to the biased positioned of pulley 162 may be observed via a tension indicator 164 associated with tensioning device 160. The tension indicator 164 may include any suitable indicator associated with the displacement or relative tension in belt 158. For example, a distinguishable color, marking, or other feature may be used to indicate the displacement and tension value. The tension indicator 164, pulley 162, and biasing force may all be adapted for a desired tension force in belt 158. Accordingly, a user may view tension indicator 164 and adjust adjustment screw 166 to vary the position of belt tensioning device 160 and the tension of belt 158 to a desired level.

In this example, adjustment screw 166 is attached to a frame portion of track 152 via two nuts 166a and 166b. The outer nut 166b is rotated to adjust the position of pulley 162 and the inner nut 166a is rotated to lock or unlock adjustment screw 166 in place with respect to the track 152. Of course, various other configurations and suitable elements may be used to adjust the position of pulley 162 and/or secure belt tensioning device 160 to a frame member.

In one example, belt 158 includes a "tooth belt" or synchronous belt. In other examples, belt 158 may include a friction belt. A belt drive system may include more than two pulleys, and more than one belt tensioning device. Additionally, it is possible to associate or include a belt tensioning device with a pulley that is also associated with a driving motor.

The exemplary tensioning device 160 and cross-link mechanism 150 provides a belt drive system that may be installed and the tension in belt 158 measure and adjusted with a reduced need for specialized tools, measuring devices, or special technical skills. Additionally, the tension of belt 158 may be viewed and adjusted over time with reduced complexity.

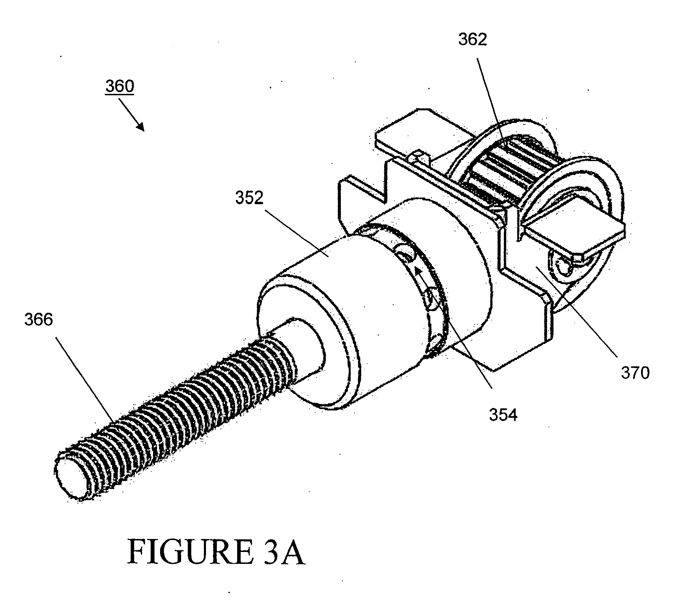

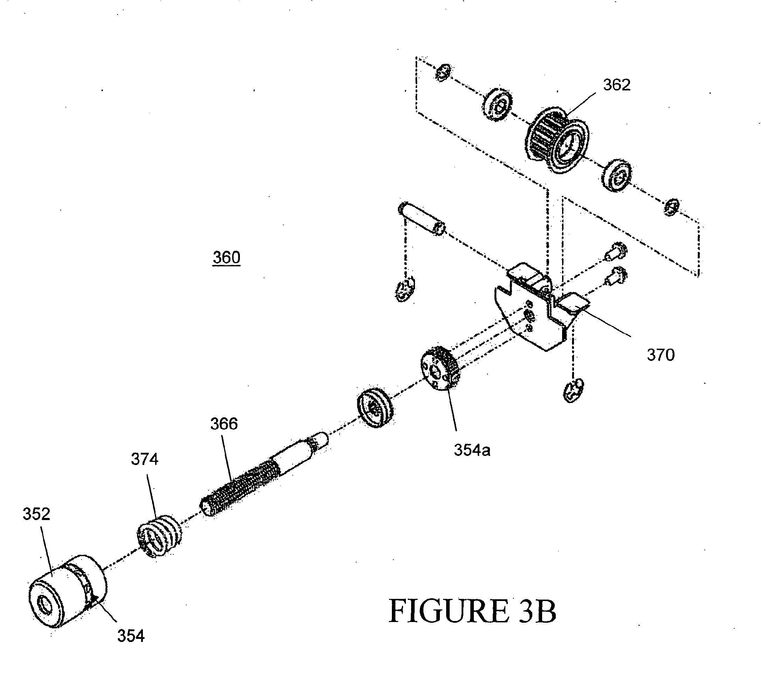

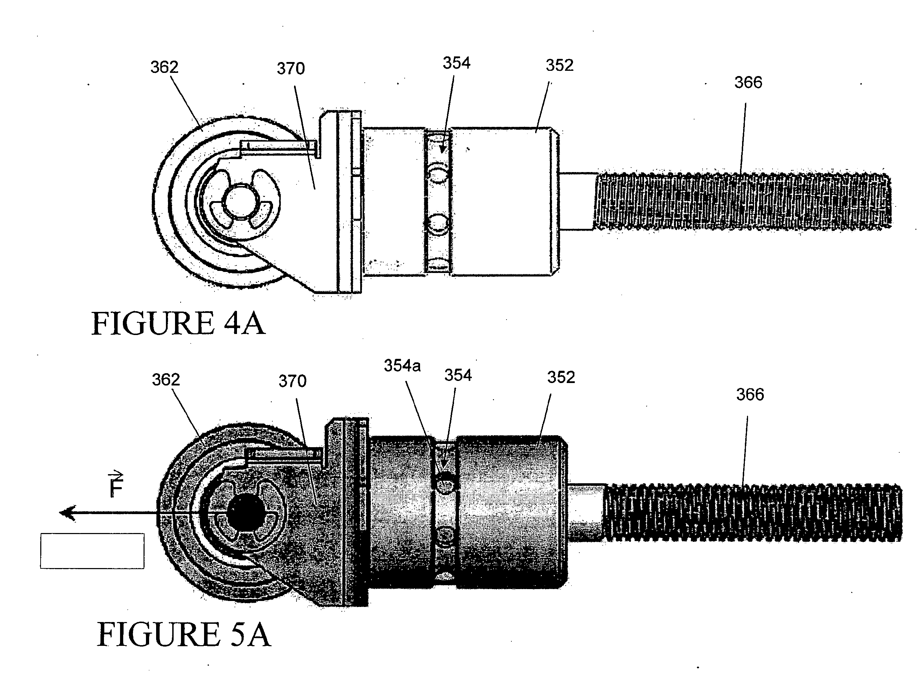

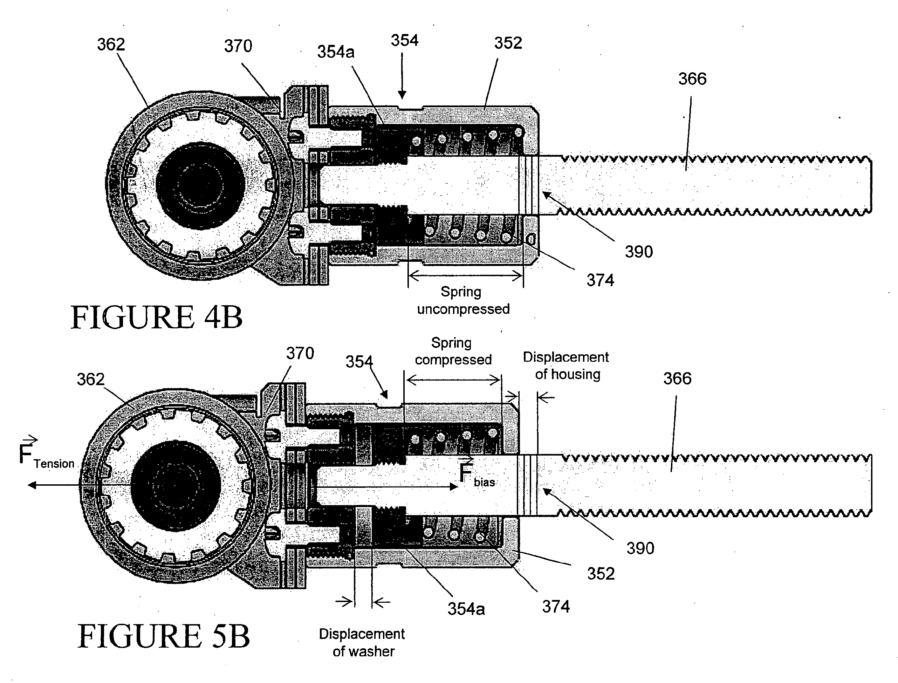

**Figures 3A, 3B, 4A, 4B, 5A, and 5B** illustrate in greater detail an exemplary belt tensioning device 360, which is similar to belt tensioning device 160 shown in **Figure 2.** In particular, **Figure 3A and 3B** illustrate a perspective view and exploded view of belt tensioning device 360. Additionally, Figures 4A, **4B, 5A, and 5B** illustrate side and cross-sectional views of exemplary belt tensioning device 360 under varying levels of force from a belt, and are referenced in combination with **Figures 3A and 3B.**

Belt tensioning device 360 generally includes pulley 362, pulley bracket 370, housing 352, biasing member 374, tension indicator including inspection window 354 and washer 354a, threaded adjustment rod 366, as well as various other washers, lock nuts, and the like for securing the belt tensioning device 360. Threaded adjustment screw 366 is adapted to pass through a frame portion to secure belt tensioning device 360 within a system and is captivated by two lock nuts (for example, similar to lock nuts 166a and 166b of **Figure 2).** The lock nuts may be tightened and loosened appropriately to move and secure belt tensioning device 360 in a desired location relative to other portions of a belt drive system.

In one example of tensioning a belt drive system, belt tensioning device 360 is initially positioned to remove slack in the belt, e.g., by rotating one of the nuts associated with adjustment screw 366. Continuing to move belt tensioning device 360 increases tension on the belt and compresses biasing member 374, e.g., a coil spring or the like, this in turn moves washer 354a in view of aperture or inspection window 354 of housing 357. The biasing member 374 and position of the tension indicator washer 354a and inspection window 354 may be arranged such that a desired belt tension value is achieved when the indicator washer 354a is centered with (and therefore visible through) inspection window 354. For example, biasing member 374 may be designed with predetermined load, e.g., a 16 pound load, such that when the indicator washer 354a is aligned with inspection window 354, tension in the belt is approximately equal to the preset load.

The location of inspection window 354, washer 354a, the biasing force of biasing member 374, and other features of belt tensioning device 360 may be varied depending on various factors such as the particular application, desired tension in the belt, desired tolerances, and the like. When a desired tension is achieved, the tensioning device 360 may be locked in place; for example, by locking a nut or other element to hold belt tensioning device 360 in place with respect to a frame member or the like.

As seen more clearly with respect to **Figures 4B and 5B,** as tensioning device 360 is positioned to remove slack from a belt and create a desired tension force in the belt, pulley 362 is displaced relative to adjustment screw 366. In particular, biasing member 374 is compressed, thereby displacing washer 354a with respect to housing 374 such that washer 354a is visible through inspection window 354. In this example, multiple inspection windows 354 are shown circumferentially around housing 352; such a configuration allows a user to view washer 354a from various positions relative to belt tensioning device 360. In one example, washer 354a may include a color varying from that of housing 352 to be clearly visible to a user.

The visual indicator may be configured in a variety of fashions. In some examples, multiple apertures may be included in housing 352 to provide a graduated inspection window associated with varying tension levels of the associated belt. Additionally, in other examples, markings 390 (see **Figures 4B and 5B)** may be included on adjustment screw 366, which may used to determine the displacement of housing 352. Generally, an indicator may include any suitable indicia to reference any two moving parts of belt tensioning system 360 associated with relative displacement of pulley 162 against biasing member 374 when the belt is under sufficient tension.

It will be obvious to those of ordinary skill in the art that various modifications, including additions and omissions of various elements of the belt tensioning device are possible. For example, various biasing elements may be used such as coil springs, leaf springs, and resilient materials such as foam, elastomers, rubber, and the like. Other configuration than those explicitly shown may also be used to provide a biasing force to balance the tension force of the belt. Various pulleys, including idler, static, contoured, and the like may be used. Alternative configurations for holding the pulley and allowing the pulley to move relative to the assembly or frame member will be apparent to those of ordinary skill in the art.

Furthermore, various modifications, including additions and omissions of various elements of the belt drive system are possible. For example, the motor and belt tension device may be positioned adjacent the same pulley. Multiple belt tensioning devices may be included within a single belt drive system, and the like.

The above detailed description is provided to illustrate exemplary embodiments and is not intended to be limiting. It will be apparent to those of ordinary skill in the art that numerous modification and variations within the scope of the present invention are possible. For example, various exemplary methods and systems described herein may be used alone or in combination with various other belt driven systems or devices whether described herein or otherwise. Additionally, particular examples have been discussed and how these examples are thought to address certain disadvantages in related art. This discussion is not meant, however, to restrict the various examples to methods and/or systems that actually address or solve the disadvantages.

## Claims

1. An integrated belt tensioning device, comprising:
a pulley;
a biasing member for biasing the pulley toward a biased position; and
an indicator associated with the position of the pulley, wherein the indicator varies according to the relative position of the pulley to the biased position.

2. The belt tensioning device of claim 1, wherein the relative position of the pulley to the biased position is associated with a force on the pulley.

3. The belt tensioning device of claim 1, further comprising a housing containing the biasing member, wherein the biasing member includes a spring.

4. The belt tensioning device of claim 3, wherein the housing is coupled to the pulley and includes a window, the window for displaying the indicator.

5. The belt tensioning device of claim 1, wherein the indicator includes one or more indicia associated with the position of the pulley.

6. A cross-link mechanism for an automated storage library including a belt tensioning device as recited by claim 1.

7. An automated storage library including a belt tensioning device as recited by claim 1.

8. A cross-link mechanism for transferring storage devices between two or more automated storage libraries, comprising:
a belt spanning between two or more pulleys;
an integrated belt tensioning device, comprising
a first pulley;
a biasing member coupled to the first pulley to bias the pulley in a biased position; and
an indicator associated with the first pulley, wherein
the first pulley is configured such that tension in the belt displaces the first pulley away from the biased position, and
the indicator varies according to the displacement of the first pulley.

9. The system of claim 8, further comprising a motor for driving the belt.

10. The system of claim 8, further comprising a mechanism coupled to the belt, the mechanism for engaging a storage device.

11. The system of claim 8, further comprising a member attaching the belt tensioning system to a frame, the member adapted to adjust the position of the belt tensioning device.

12. The system of claim 8, further comprising a housing containing the biasing member and wherein the biasing member includes a spring.

13. The system of claim 12, wherein the housing is coupled to the first pulley and includes a window, the window adapted to selectively align with the indicator associated with the displacement of the first pulley.

14. The system of claim 8, wherein the indicator includes one or more indicia associated with the displacement of the first pulley.

15. The system of claim 8, wherein the relative position of the first pulley to the biased position is associated with a tension in the belt.

16. A method for adjusting tension in a belt drive system having a belt spanning two or more pulleys, comprising:
biasing a pulley of the belt drive system with a biasing member to a biased position;
moving the pulley to increase tension in the belt such that the pulley moves against the biasing member and the biasing member balances the tension of the belt.

17. The method of claim 16, further including an indicator associated with the relative displacement of the pulley from the biased position and the tension in the belt.

18. The method of claim 17, wherein the pulley, biasing member, and indicator are adjustably mounted to a frame member of the belt drive system.

19. The method of claim 16, wherein the belt drive system includes a cross-link mechanism for two or more automated storage libraries.
